# EUROPEAN PATENT APPLICATION

(11) **EP 4 549 221 A1**
(43) Date of publication of application: **07.05.2025**
(21) Application number: 24209419.1
(22) Date of filing: 29.10.2024
(51) Int. Cl.: B60L 3/00, B60L 3/04, B60L 3/12, B60L 58/10, B60L 1/00, H01H 39/00

(54) **ELECTRICAL SYSTEM OF A ROAD VEHICLE COMPRISING A PYROTECHNIC DEVICE FOR DISCONNECTING AN ELECTRICAL ENERGY STORAGE DEVICE AND RELATED ROAD VEHICLE**

(30) Priority: 31.10.2023 IT 202300022890
(71) Applicant: FERRARI S.p.A., 41100 Modena (IT)
(72) Inventor: LO CALZO, Giovanni, 41100 MODENA (IT); SITTA, Ugo, 41100 MODENA (IT); DE ANGELIS, Alessandro, 41100 MODENA (IT); SALONIA, Emanuele, 41100 MODENA (IT); ABBIATI, Andrea Benoit, 41100 MODENA (IT); CIOCCI, Fabio, 41100 MODENA (IT)
(74) Representative: Studio Torta S.p.A.

(57) **Abstract**

An electrical system (7) of a road vehicle (1) comprising a high-voltage (HV) electrical circuit (8) provided with a first storage system (6) and at least one electrical machine (5) for an electric or hybrid powertrain system; a low-voltage (LV) electrical circuit (9) provided with a second storage system (10) and a plurality of electrical loads (11); at least one pyrotechnic device (12) disposed between the first storage system (6) and the electrical machine (5) or between the second storage system (10) and the plurality of electrical loads (11), and configured to deflagrate by disrupting the connection (18) between the first storage system (6) and the electrical machine (5) or between the second storage system (10) and the plurality of electrical loads (11); wherein the devices pyrotechnic device (12) is at least partially powered by the first storage system (6).

## Description

### CROSS-REFERENCE TO RELATED APPLICATIONS

This patent application claims priority from Italian patent application no. 102023000022890 filed on October 31, 2023, the entire disclosure of which is incorporated herein by reference.

### TECHNICAL FIELD

The present invention relates to an electrical system of a road vehicle comprising a pyrotechnic device for disconnecting an electrical energy storage device and related road vehicle.

In particular, the present invention has an advantageous, but not exclusive, application in a high-performance electric (hybrid) road vehicle, to which the description that follows will refer explicitly, but without thus losing its general nature.

### CONTEXT OF THE INVENTION

Hybrid or electric vehicles (EV/PHEV/BEV) with at least one electrical machine, which is electrically connected to an electrical energy storage system, or a battery pack, and is mechanically connected to the driving wheels to transmit the driving torque to them, are known.

The electrical system of a hybrid or electric vehicle usually comprises a high-voltage (in a relative sense, as it could also have a rated voltage of only 48 Volts) and high-power electrical circuit to which the electrical machine is connected; the high-voltage electrical circuit comprises a storage device (provided with at least one electrochemical battery pack, for example lithium-ion or lithium-polymer), and a bidirectional direct current/alternating current electronic converter that, on the direct current side, is connected to the storage device and, on the alternating current side, is connected to the electrical machine and has the function of controlling the electrical machine itself.

The electrical system of these vehicles also comprises a low-voltage (generally having a rated voltage of 12 Volts) and low-power electrical circuit to which all the auxiliary electrical services (such as the control units of all the vehicle subsystems, the infotainment system, the anti-theft system, the passenger compartment lighting system, the external lights, the electric starter motor of the combustion engine in the case of hybrid vehicles, etc.) are connected.

In particular, the low-voltage electrical circuit normally also comprises the so-called BMS (*Battery Management System*) of the high-voltage storage device.

In the vehicles indicated here above, in order to prevent fires or explosions when short circuits of the high-voltage storage device occur, and thus also in critical cases such as major accidents, it is particularly important to disrupt the connection between the high-voltage storage device, or the battery, and the rest of the high-voltage circuit. In particular, there is a need for said disruption to be rapid and reliable, especially in conditions of extremely high overcurrents.

For these purposes, several pyrotechnic devices (also known as pyrofuse or pyroswitch) have been developed over the years. These devices commonly comprise a bar of conducting material that connects the high-voltage battery to the rest of the high-voltage circuit. There is an explosive charge (for example of the type used for airbags, highly reliable) on this bar of conducting material. In this manner, in the case of overcurrent or a major accident, the explosive charge is made to deflagrate, causing a small detonation, which irreversibly disrupts the passage of current across said bar of conducting material, which will then be replaced together with the explosive charge, in order to use the road vehicle once again after having restored the normal safety conditions, for example by changing the high-voltage battery.

Normally, pyrotechnic devices are powered by the low-voltage circuit. In any case, in order to allow the pyrotechnic device also to deflagrate in the absence of this power supply, the solutions in the prior art provide for the use of a dedicated low-voltage power supply, i.e. one that is totally independent from the other vehicle power supplies.

However, in high-performance vehicles, there is always a need to reduce weight and dimensions, so as to maximise the vehicle's performance, such as on a track, and the addition of further power supply circuits, with the respective storage devices, is not easy to implement.

For this reason, normally, a fuse of a known type is present in high-performance vehicles, which disrupts the connection between the high-voltage battery and the rest of the high-voltage circuit in the case of overcurrents. However, this fuse still represents a limit for reduction of weight and dimensions in high-performance vehicles, as it also reaches 20 cm in length for a weight higher than one kilogram.

There would therefore appear to be a need to optimise the vehicle electrical system in terms of dimensions and weight, while still maintaining unaltered or even increasing the safety of the road vehicle in the case of critical situations.

### DESCRIPTION OF THE INVENTION

The object of the present invention is to provide an electrical system for a road vehicle comprising a pyrotechnic device for the disconnection of an electrical energy storage device and a relative road vehicle that are at least partially free from the drawbacks described here above and, at the same time, are easy and cheap to manufacture.

According to the present invention, an electrical system of a road vehicle comprising a pyrotechnic device for the disconnection of an electrical energy storage device and a relative road vehicle are provided according to what is claimed in the independent claims that follow and, preferably, in any one of the claims that are directly or indirectly dependent upon the independent claims.

The claims describe preferred embodiments of the present invention and form an integral part of this description.

### BRIEF DESCRIPTION OF THE DRAWINGS

The present invention will now be described with reference to the appended drawings, which illustrate several non-limiting embodiments thereof, wherein:
- Figure 1 is a schematic plan view, with details removed for clarity, of a road vehicle in accordance with an embodiment of the present invention;
- Figure 2 is a schematic view of a non-limiting embodiment of the electrical system of the road vehicle of Figure 1.

### DETAILED DESCRIPTION

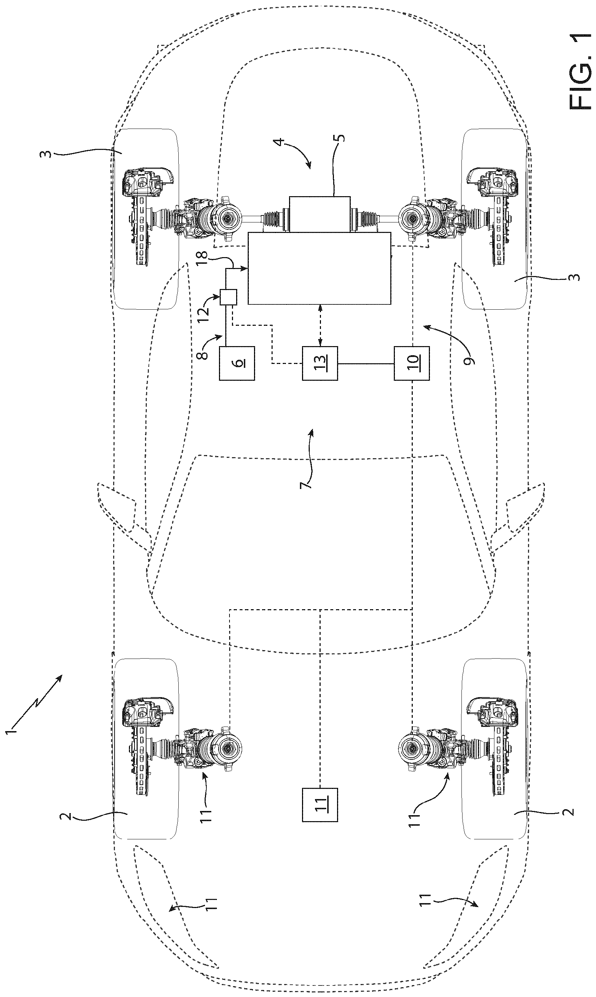

In Figure 1, the number 1 generically denotes, in its entirety, a road vehicle provided with two front wheels 2 and two rear wheels 3, of which at least one pair (or all) receive the driving torque from an electric or hybrid power train system 4. The power train system 4 may be exclusively electric (i.e. comprise solely one or more electric motors) or hybrid (i.e. comprise an internal combustion engine and at least one electric motor).

The same reference numbers and reference letters in the figures identify the same elements or components with the same function.

In this description, the term "second" component does not imply the presence of a "first" component. Such terms are, in fact, adopted as labels to improve clarity and should not be intended as limiting.

The elements and features illustrated in the different preferred embodiments, including the drawings, may be combined with each other without deviating from the scope of protection of this application as described below.

The power train system 4 preferably comprises at least one electrical machine 5, which is controlled by an electronic AC/DC converter (of known type and not shown) (i.e. an "inverter"), which is connected to a first electrical energy storage system 6 provided with chemical batteries. The first electrical energy storage system 6 is preferably a vehicle battery pack.

Preferably but not necessarily, the electronic DC-AC power converter (of known type and not further detailed below) is bidirectional and comprises a direct current side connected to the first storage system 6 and a three-phase alternating current side that is connected to the electrical machine 5.

Furthermore, the road vehicle 1 comprises an electrical system 7, which comprises a high-voltage HV electrical circuit 8 (in the relative sense), having, by way of non-limiting example, a rated voltage of 800 or 400 or 48 Volts, and a low-voltage LV electrical circuit 9 having, for example, a rated voltage of 12 Volts.

It is important to emphasise that the electrical circuit 8 is called *"high-voltage"* because it has a rated voltage (800 V, 400 V, 48 V) greater than the rated voltage (12 V) of the electrical circuit 9, i.e. the definition of *"high-voltage"* is to be intended as relative solely to the electrical system 7 and with reference to the electrical circuit 9 having a rated voltage of 12 Volts.

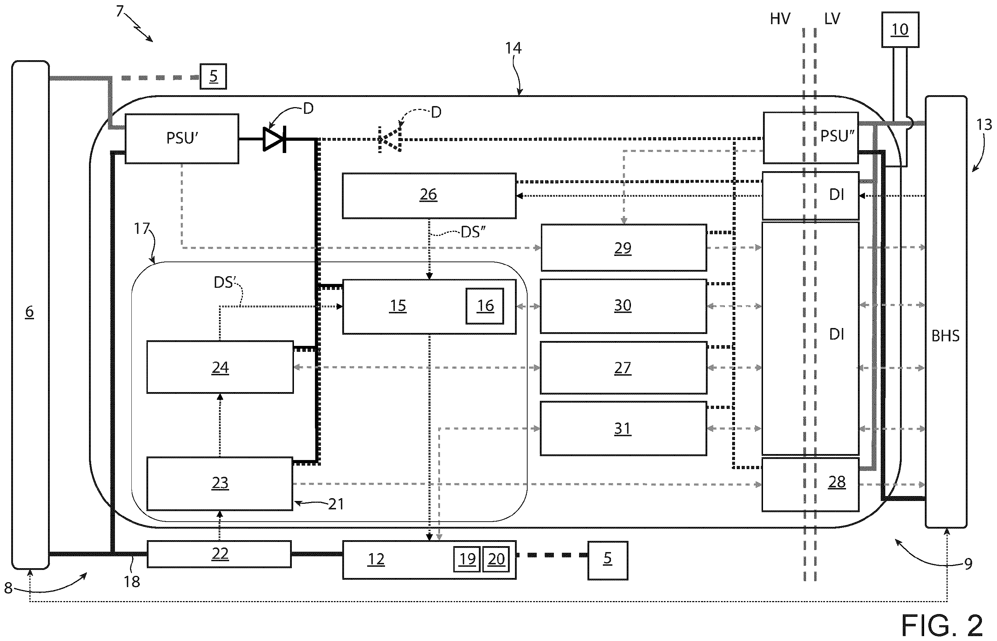

In certain non-limiting cases, the high-voltage HV electrical circuit 8 comprises the first storage system 6 and the electrical machine 5 (i.e. the stator windings of the electrical machine 5). For simplicity, in Figure 2 the high-voltage HV electrical circuit 8 comprises only at least the first storage system 6. In particular, the first storage system 6 is configured to power the electrical machine 5.

According to several non-limiting preferred embodiments, the low-voltage LV electrical circuit 9 comprises a second storage system 10 (also obviously having the same voltage of the electrical circuit 9) and a plurality of electrical loads 11, each of which is adapted solely to absorb electrical energy for its own functioning (i.e. none of these electrical loads 11 is capable of producing electrical energy). In other words, the second storage system 10 is configured to power the plurality of electrical loads 11.

The second storage system 10 has a lower voltage than the first storage system 6.

Advantageously but not necessarily, the continuous electrical loads 11 comprise, for example, an alarm system, an infotainment system, an inverter and/or BMS and/or steer by wire electronic control units, active suspensions, external lights, an air conditioning system (not shown), the window controls, the car radio, the navigation system, etc.

Advantageously, the electrical system 7 further comprises a pyrotechnic device 12, which is arranged between the first storage system 6 and the electrical machine 5 or between the second storage system 10 and at least part of the plurality of electrical loads 11.

The pyrotechnic device 12 is configured to deflagrate, disrupting the connection between the first storage system 6 and the electrical machine 5 or between the second storage system 10 and the at least part of the plurality of electrical loads 11.

Advantageously, the pyrotechnic device 12 can be at least partially, in particular totally, powered (i.e. powered when the system 7 is assembled) by the first storage system 6.

In the preferred but non-limiting embodiment of Figure 2, the electrical system 7 further comprises a control unit 13 ("ECU"). Physically, the control unit 13 may comprise a single device or several devices separate from each other and communicating by means of the CAN or any other data network of the road vehicle 1.

Preferably, the control unit 13 comprises (is) a BMS (Battery Management System) of the first storage system 6 powered by the second storage system 10. In particular, the BMS is configured to monitor the correct state of health of the first storage system 6 by means of known techniques that are not further detailed.

Advantageously, but not in a limiting manner, the pyrotechnic device 12 is configured to deflagrate selectively in the case of overcurrent from the first storage system 6 (detected by the BMS) or from the second storage system 10 to which it is connected, or by means of an EC command from the control unit 13.

In the non-limiting embodiment of Figure 2, the continuous lines indicate how the respective elements are powered, whereas the arrows indicate an exchange of data and its direction of transfer.

Preferably, the electrical system 7 comprises control circuitry 14, which is interconnected between the control unit 13 (in particular between the BMS of the first storage system 6) and the pyrotechnic device 12. In particular, the control circuitry 14 comprises hardware and software elements for the management, control and verification of the pyrotechnic device 12.

In several non-limiting preferred cases, as shown in Figure 2, the control circuitry 14 comprises a detonation device 15, which in turn comprises an electrical energy storage element 16, in particular impulsive, more particularly a capacitor. The detonation device 15 is connected to the pyrotechnic device 12 and determines its deflagration. In other words, the detonation device 15 serves as the detonator of the pyrotechnic device 12.

Advantageously, but not in a limiting manner, the control circuitry 14 comprises a first trigger circuit 17, which is configured to transmit a first signal DS' of detonation to the detonation device 15 to deflagrate the pyrotechnic device 12 in the event of an overcurrent on the connection 18 between the first storage system 6 or the second storage system and the pyrotechnic device 12 (or between the first storage system 6 and the electrical machine 5).

According to what is described, therefore, the pyrotechnic device 12 serves as a fuse on the connection 12. This is possible based on the fact that the pyrotechnic device 12 is powered by the first storage system 6 (i.e. it is independent from the low-voltage LV circuit 9).

Furthermore, advantageously, the structure described above comprising the storage element 16 determines a minimum consumption (dozens of micro amperes) for the power supply of the pyrotechnic device 12 and its deflagration in the case of overcurrent. In fact, once the necessary energy is stored in the storage element 16, or the capacitor, the detonation device 15 works in impulsive mode and has minimum quiescent currents.

Advantageously, but not in a limiting manner, the pyrotechnic device 12 comprises a metal connecting element 19 (for example a metal bar) interposed (on the connection 18) between the first storage system 6 and the electrical machine 5 and/or between the second storage system 10 and the plurality of electrical loads 11.

In order to disrupt the supply of energy, the pyrotechnic device 12 further comprises an explosive element 20, comprising an explosive charge arranged in a special capsule and selectively controllable by the control unit 13 and by the control circuitry (14). In particular, by deflagrating, the explosive element 20 irreversibly breaks the metal connecting element 19, effectively isolating the first storage system 6 or the second storage system 10 (i.e. the storage system to which it is connected).

In several non-limiting preferred cases, the first trigger circuit 17 in turn comprises a measuring device 21 configured to measure the current transiting on the connection 18 between the pyrotechnic device 12 and the first storage system 6. In particular, the measuring device 21 comprises a shunt 22, preferably comprising resistances in the order of microohms, and a conditioning device 23 to amply said signal correctly.

Advantageously, but not in a limiting manner, the trigger circuit 17 also comprises a comparator device 24, connected between the measuring device 21 (in particular between the conditioning device 23) and the detonation device 15. The comparator device 24 is configured to compare the current measured on the connection 18 by the measuring device 21 with a predefined current. If the measured current exceeds the predefined current, the measuring device 21 is configured to send the first detonation signal DS' to the detonation device 15. In other words, the comparator device 24 determines whether or not to switch the aforesaid capsule and therefore the explosive element 20.

Preferably, the detonation device 15 and the first trigger circuit 17 can be powered selectively by the first storage system 6 or by the second storage system 10 (possibly by means of the BMS).

In particular, in accordance with what is shown schematically in Figure 2, in the absence of power on the low-voltage electrical circuit 9 (i.e. the 12 V coming from the storage device 10), the detonation device 15 and the first trigger circuit 17 are configured to be powered by the first storage system 6. In other words, for as long as the power supply of the low-voltage electrical circuit 9 is present, the power supply of the devices 15 and 17 is delegated to this power supply. In the opposite case, it is delegated to the high-voltage circuit 8, i.e. to the first storage system 6. In this manner, discharging of the first storage system 6 for power supply of these devices 15 and 17 is avoided, even if to a minimal extent. This allows the function of the fuse of the pyrotechnic device 12 to be maintained in any case.

In particular, as shown in Figure 2, the detonation device 15 and the first trigger circuit 17 are powered by the first storage system 6 by means of a PSU' (power supply unit) comprising a chain of resistances (and a Zener diode) to allow the drop in voltage necessary to power the devices 15 and 17 at the correct voltage.

More in particular, consistently, the detonation device 15 and the first trigger circuit 17 are powered by the second storage device 10 by means of a PSU" (power supply unit) comprising a chain of resistances (and a Zener diode) to allow the devices 15 and 17 to be powered at the correct voltage.

Preferably, therefore, the power supply of the detonation device 15 and the first trigger circuit 17 follows a function OR between the two storage devices 6 and 10. In the non-limiting embodiment of Figure 2, this is schematised by means of the use of two diodes D converging towards a common power supply section for said devices 15 and 17.

In this manner, even in the case of a long stop, in which the BMS is switched off to limit consumption of the battery pack, the pyrotechnic device 12, the detonation device 15 and the first trigger circuit 17 continue to be powered solely by the HV, nonetheless allowing the pyrotechnic device 12 to detonate in the case of overcurrent, such as, for example, through venting of the first storage system 6 or due to an accident of the switched-off road vehicle 1.

Advantageously, but not in a limiting manner, the control circuitry comprises a second trigger circuit 25, configured to transmit a second detonation signal DS" to the detonation device 15 to deflagrate the pyrotechnic device 12 upon command of the control unit 13.

In particular, the second trigger circuit 25 comprises a drive device 26 connected between the control unit 13, in particular by means of a digital isolator DI, and the detonation device 15 and configured to send the second detonation signal DS" to the detonation device 15 in the event of an accident (beyond a certain extent) or a degraded and dangerous state of the first storage system 6 detected by the control unit 13 (in particular by the BMS). In this manner, it is possible to isolate the first storage system 6, i.e. the battery pack, also in a sentient manner and not only as an overcurrent fuse.

In particular, it is therefore possible to request detonation of the pyrotechnic device 12 even in cases of no overcurrent, by means of specific strategies. In particular, during an accident, detected by means of an accelerometer on board the road vehicle 1, an overcurrent does not necessarily occur, but for serious accidents it could nonetheless be preferable to isolate the storage system 6, i.e. the high-voltage battery pack.

There could be other examples of voluntary deflagration in the case of rapid degrading of the storage system 6 detected by the BMS, or in the case of venting that has not produced an overcurrent on the connection 18 yet. In all these cases, it is possible to disconnect/isolate the battery by commanding the signal DS''.

Advantageously, but not in a limiting manner, and in accordance with what has been stated so far, the second trigger circuit 25 is powered exclusively by the low-voltage LV electrical circuit 9, and therefore by the second storage system 10.

According to several preferred but non-limiting embodiments, as shown in Figure 2, the control circuitry 14 further comprises a first verification device 27 connected to the comparator device 24 to check cyclically that the latter is able to discriminate the predefined current without errors.

Preferably, the control circuitry 14 also comprises a second verification device 28 connected to the measuring device 21 to verify a consistency between the current measured on the connection 18 and a current detected by the control unit 13. In particular, the verification device 28 comprises an isolated amplifier that transmits the current to the BMS for a consistency check.

In particular, the BMS conventionally uses, on the HV bus, also a Hall-effect sensor (highly reliable), which nonetheless cannot be used due to the slow reading dynamics and to the reactivity necessary for isolation of the storage system 6. Therefore, such sensor is used by the second verification device 28 to verify that the shunt 22 and the measuring device 21 correctly read the current on the connection 18, which corresponds with the one on the HV bus read by the Hall-effect sensor.

Preferably, the first verification device 27 and the second verification device 28 are also connected to the control unit 13 and are powered by the low-voltage LV electrical circuit 9.

Advantageously, but not in a limiting manner, the control circuitry 14 further comprises a third verification device 29 connected both to the high-voltage circuit 8 (in particular to the power supply unit PSU'), and to the low-voltage circuit 9 (in particular to the power supply unit PSU"). The third verification device 29 is configured to verify cyclically, in particular by comparison, that the first storage system 6 is actually supplying energy.

In addition, not in a limiting manner, the control circuitry 14 comprises a fourth verification device 30 connected to the detonation device 15 to verify cyclically its integrity and its ability to detonate the pyrotechnic device 12.

In particular, the fourth verification device 30 exchanges signals with the detonation device 15, asking it to activate as if it were detonating, but by means of a different path to the one that makes the pyrotechnic device 12 detonate. In other words, the fourth verification device 30 verifies the integrity of the detonator.

In conclusion, not in a limiting manner, the control circuitry 14 comprises a fifth verification device 31 connected to the pyrotechnic device 12 to check its integrity and deflagration capability.

In particular, the pyrotechnic device 12 appears as a resistor to the rest of the system 7. In particular, the pyrotechnic device 12 is technically similar to the one commonly present in airbags, which is therefore a well-regulated object, the detonation conditions of which (current intensity and time) are well-defined.

In particular, in the fifth verification device 31, these conditions are exploited to test the integrity of the pyrotechnic device 12 using a secure non-detonation current. In other words, the verification device 31 allows a current to flow that is considerably lower than the deflagration one and, if the current flows and crosses the pyrotechnic device 12, then this device is integral.

Preferably, therefore, the pyrotechnic device 12 has a combined function, comprising a fuse effect, i.e. one that disrupts the connection 18 in the case of overcurrent, and a sentient function, i.e. one that allows the pyrotechnic device 12 to be detonated voluntarily, for example in the cases indicated above.

Preferably, all the verification devices 27-31 described above are powered by the low-voltage circuit 9, i.e. by the storage system 10.

Preferably, the verification devices 27, 29, 30 and 31 interface with the BMS by means of a digital isolator DI.

Preferably, the electrical system 7 comprises a micro-controller, which is inserted into the low-voltage LV circuit 9, and comprises the entire control circuitry 14. In this manner, the micro-controller may act as a bridge with the BMS, performing all the functions indicated here above for the control circuitry. Thus, it is possible to implement the system described above without having to alter the BMS and its connections. This feature may be particularly useful since, for safety reasons, the BMS is a particularly complex component to alter, due to the robustness it needs and the particularly important role it plays.

Advantageously but not necessarily, the low voltage LV is equal to or lower than 48 V, in particular equal to 12 V.

Advantageously but not necessarily, the high voltage HV is equal to or greater than 48 V, in particular equal to 48 V, preferably equal to or greater than 400 V, in particular 400 V or 800 V.

Several embodiments will be shown below solely as an example and are therefore not to be considered as limiting.

Although the invention described here above makes particular reference to an example of a precise embodiment, it is not to be considered as limited to said example of an embodiment, as its scope includes all those variants, changes or simplifications covered by the appended claims, such as, for example, a different type of storage systems and verification devices or different measuring methods, etc.

The embodiments described here can be combined with each other without deviating from the scope of protection of the present invention.

The system and the vehicle described above offer numerous advantages.

In the first place, they allow a significant reduction in the size and weight of the electrical system of the road vehicle 1, eliminating the need for a fuse of large dimensions and a weight even greater than one kilogram.

In addition, it is permitted to control detonation of the pyrotechnic device in situations of risk for the safety of the vehicle and its occupants that are different to the simple overcurrent that currently triggers the fuse interposed between the electrical machine and the battery pack.

Furthermore, thanks to the power supply coming from the high-voltage HV storage system, it is still possible to maintain the function of the fuse even when the vehicle has been switched off for months or in critical situations in which the power supply is no longer present in the low-voltage LV circuit 9.

A further advantage of the present invention resides in the fact that it is possible to insert, into the low-voltage LV circuit, a specific micro-controller to act as a bridge with the BMS, performing all the functions indicated here above for the control circuitry. In this manner, it is possible to implement the system described above without having to alter the BMS and its connections.

In addition, the control circuitry and the pyrotechnic device described above can also be used to selectively isolate 48 V or 12 V battery packs as well, according to the same logic described above.

In conclusion, the electrical system 7 described above has a relatively reduced cost and complexity, since it comprises commercially available components.

### LIST OF REFERENCE NUMBERS OF THE FIGURES

- 1: vehicle
- 2: wheels
- 3: wheels
- 4: powertrain system
- 5: electrical machine
- 6: first storage system
- 7: electrical system
- 8: high-voltage electrical circuit
- 9: low-voltage electrical circuit
- 10: second storage system
- 11: electrical loads
- 12: pyrotechnic device
- 13: control unit
- 14: control circuitry
- 15: detonation device
- 16: storage element
- 17: first trigger circuit
- 18: connection
- 19: connection element
- 20: explosive element
- 21: measuring device
- 22: shunt
- 23: conditioning device
- 24: comparator device
- 25: second trigger circuit
- 26: drive device
- 27: first verification device
- 28: second verification device
- 29: third verification device
- 30: fourth verification device
- 31: fifth verification device
- D: diode
- DI: digital isolator
- DS'': detonation signal
- DS': detonation signal
- EC: external command
- HV: high voltage
- LV: low voltage
- PSU': power supply unit
- PSU'': power supply unit

## Claims

1. An electrical system (7) of a road vehicle (1); the electrical system (7) comprises:
a high-voltage (HV) electrical circuit (8) provided with a first storage system (6) and at least one electrical machine (5) for an electric or hybrid powertrain system (4); wherein the first storage system (6) is configured to power the electrical machine (5);
a low-voltage (LV) electrical circuit (9) provided with a second storage system (10) and a plurality of electrical loads (11); wherein the second storage system (10) is configured to power the plurality of electrical loads (11);
at least one pyrotechnic device (12) disposed between the first storage system (6) and the electrical machine (5) or between the second storage system (10) and the plurality of electrical loads (11), and configured to deflagrate by disrupting the connection (18) between the first storage system (6) and the electrical machine (5) or between the second storage system (10) and the plurality of electrical loads (11);
the electrical system (7) being **characterised in that** the pyrotechnic device (12) is at least partially powered by the first storage system (6).

2. The electrical system (7) according to claim 1, and comprising a control unit (13), in particular a management system (BMS) of the first storage system (6) powered by the second storage system (10), wherein the pyrotechnic device (12) is configured to selectively deflagrate in the event of an overcurrent from the first storage system (6) or the second storage system (10) to which it is connected, or by means of a command (EC) from the control unit (13).

3. The electrical system (7) according to claim 2 and comprising control circuitry (14) interconnected between the control unit (13) and the pyrotechnic device (12).

4. The electrical system (7) according to claim 3, wherein the control circuitry (14) comprises a detonation device (15), which in turn comprises an electrical energy storage element (16), in particular impulsive, more particularly a capacitor; wherein the detonation device (15) is connected to the pyrotechnic device (12) and determines the deflagration thereof.

5. The electrical system (7) according to claim 4, wherein the control circuitry (14) comprises a first trigger circuit (17) configured to transmit a first signal (DS') of detonation to the detonation device (15) to deflagrate the pyrotechnic device (12) in the event of an overcurrent on the connection (18) between the first storage system (6) or the second storage system (10) and the pyrotechnic device (12).

6. The electrical system (7) according to claim 5, wherein the first trigger circuit (17) in turn comprises:
- a measuring device (21) configured to measure current between the pyrotechnic device (12) and the first storage device; and
- a comparator device (24) connected between the measuring device (21) and the detonation device (15) and configured to compare the current measured by the measuring device (21) with a predefined current and to send a first detonation signal (DS') to the detonation device (15) in the event of the measured current exceeding the predefined current.

7. The electrical system (7) according to claim 6, wherein the control circuitry (14) further comprises:
- a first verification device (27) connected to the comparator device (24) to verify cyclically that the latter is able to discriminate without error a predefined current; and/or
- a second verification device (28) connected to the measuring device (21) to verify a consistency between the measured current and a current detected by the control unit (13); wherein the first verification device (27) and the second verification device (28) are also connected to the control unit (13) and are supplied by the low-voltage (LV) electrical circuit (9).

8. The electrical system (7) according to any one of claims 5, 6 or 7, wherein the detonation device (15) and the first trigger circuit (17) are selectively suppliable by the first storage system (6) or by the second storage system (10); in particular, wherein, in the absence of power supply on the low-voltage (LV) electrical circuit (9), the detonation device (15) and the first trigger circuit (17) are configured to be supplied from the first storage system (6).

9. The electrical system (7) according to any one of claims 4 to 8, wherein the control circuitry (14) comprises a second trigger circuit (25), configured to transmit a second detonation signal (DS'') to the detonation device (15) to deflagrate the pyrotechnic device (12) upon command of the control unit (13).

10. The electrical system (7) according to claim 9, wherein the second trigger circuit (25) comprises a trigger device (26) connected between the control unit (13), in particular by means of a digital isolator (DI), and the detonation device (15) and configured to send the second detonation signal (DS") to the detonation device (15), in particular in the event of an accident or a degraded and dangerous state of the first storage system (6) is detected by the control unit (13).

11. The electrical system (7) according to claim 10, wherein the second trigger circuit (25) is exclusively supplied by the low-voltage (LV) electrical circuit (9).

12. The electrical system (7) according to any one of claims 3 to 11, wherein the control circuitry (14) further comprises:
- a third verification device (29) connected to both the high-voltage circuit (HV) and the low-voltage circuit (LV) and configured to verify cyclically, in particular by comparison, that the first storage system (6) is actually supplying energy; and/or
- a fourth verification device (30) connected to the detonating device (15) to verify cyclically its integrity and its ability to detonate the pyrotechnic device (12); and/or
- a fifth verification device (31) connected to the pyrotechnic device (12) to check its integrity and deflagration capability.

13. The electrical system (7) according to any one of the preceding claims, wherein the pyrotechnic device (12) comprises in turn:
- a metal connecting element (19) interposed between the first storage system (6) and the electrical machine (5) and/or between the second storage system (10) and the plurality of electrical loads (11);
- an explosive element (20) comprising an explosive charge arranged in a capsule and selectively controllable by a control unit (13) and control circuitry (14).

14. The electrical system (7) according to any of the preceding claims, wherein the low voltage (LV) is equal to or less than 48 V, in particular equal to 12 V.

15. The electrical system (7) according to any one of the preceding claims, wherein the high voltage (HV) is equal to or greater than 48 V, in particular equal to or greater than 400 V, more particularly equal to 800 V.

16. A road vehicle (1) comprising:
- four wheels (2, 3), of which at least one pair of wheels (2, 3) is driving;
- an electric or hybrid power train system (4);
- an electrical system (7) according to any one of the preceding claims.
